Europäisches Patentamt

European Patent Office

Office européen des brevets

(11) Publication number: **0 069 561**
**B1**

(12) **EUROPEAN PATENT SPECIFICATION**

(45) Date of publication of patent specification: **08.10.86**

(51) Int. Cl.⁴: **G 08 C 15/12, H 04 N 5/76**

(21) Application number: **82303490.5**

(22) Date of filing: **02.07.82**

(54) Data transmission system.

(30) Priority: **03.07.81 JP 104716/81**

(43) Date of publication of application:
**12.01.83 Bulletin 83/02**

(45) Publication of the grant of the patent:
**08.10.86 Bulletin 86/41**

(84) Designated Contracting States:
**DE FR GB**

(56) References cited:
**WO-A-79/00351**
**DE-A-2 412 959**
**GB-A-2 087 194**
**US-A-3 757 050**
**US-A-4 097 893**

(73) Proprietor: **Matsushita Electric Industrial Co., Ltd.**
**1006, Oaza Kadoma**
**Kadoma-shi Osaka-fu, 571 (JP)**

(72) Inventor: **Mino, Mineo**
**1-17-10, Nasuzukuri**
**Hirakata-shi Osaka-fu (JP)**
Inventor: **Nagasaki, Sakon**
**3-16-20, Myokenzaka**
**Katano-shi Osaka-fu (JP)**
Inventor: **Yoshikazu, Kageyama**
**1-57, Saigodori**
**Moriguchi-shi Osaka-fu (JP)**
Inventor: **Yamanishi, Kazuhiro**
**3-106, Arakawa**
**Higashiosaka-shi Osaka-fu (JP)**

(74) Representative: **Crawford, Andrew Birkby et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a data transmission system for transmitting a remote control signal and data signal, when, for example, a portable video tape recorder (to be hereinafter called VTR) is remotely controlled by exterior additional apparatus, such as a video camera.

Conventionally, to control remotely a VTR from a video camera or similar apparatus, control lines are needed (connecting each of the aforesaid apparatuses) as many as the number of the required operating modes. Recently, in order to improve the aforesaid control method, it has been proposed to transmit a remote control signal on one line by means of the assignment of various voltages to respective operating modes, but this method includes defects such as bad resolution, the necessity for a complex encode and decode circuit, and so on.

An object of the invention is to provide an efficient data transmission system for transmitting remote control signals and data signals by means of a serial data transmission method whereby a data code is transmitted on the basis of a serial clock signal.

Accordingly, the present invention provides a data transmission system for sending and receiving data among a plurality of apparatuses on the basis of a serial clock signal, comprising a data transmission system for sending and receiving data among a plurality of apparatuses on the basis of a serial clock signal, comprising: a serial clock signal generating means (20) for periodically generating clock signals $(m_1—m_k)$; a clock signal line 21 for transmitting said clock signals; a data signal line (38) for transmitting said data; a plurality of data transmitting/receiving means (40, 50, 60, 70) coupled to said clock signal line (21) and said data signal line (38) and also to said plurality of apparatuses, respectively, for sending and receiving coded data signals among each other through said data signal line, characterised in that said clock signal generating means (20) periodically generates plural sets of serial clock signals in a manner such that each period comprises a plural set of clock signals, said plural set comprising a set of clock signals $(m_i)$ followed by a clock-absent interval $(t_i)$ for a predetermined number (k) of sets of clock signals under the condition that said period starts with an initial serial clock $(m_1)$ and ends with a final clock-absent interval $(t_k)$, wherein said final clock-absent interval $(t_k)$ is longer than the longest one of the other clock-absent intervals $(t_1—t_k-1)$ in said period, each of said plurality of data transmitting/receiving means (40, 50, 60, 70) comprising a serial interface circuit (22, 46, 54, 68) for sending or receiving in each period a set of serial coded data signals to said data signal line in accordance with a corresponding received set of serial lock signals $(m_i)$.

US—A—3757050 discloses a data-transmission system as defined in the prior art portion of claim 1.

The data transmission system of the preferred embodiment of the invention provides a serial clock signal generating means for generating periodically serial clock signals which consist of n bit serial clock pulse signal units $m_1$, $m_2$ ... and $m_K$ (K being an arbitrary integer), intervals between said serial clock signal units not including any clock signals and being designated $t_1$, $t_2$, ... and $t_K$. A first data generating means generates coded data pulse signals $D_1$ on the basis of said serial clock signal units $m_1$, a second data generating means generating coded data pulse signal $D_2$ on the basis of said serial clock signal units $m_2$, etc. up to Kth data generating means generating the coded data pulse signals $D_K$. A data transmitting line mixes and transmits said signal $D_1$ provided by the first data generating means, said signals $D_2$ provided by the second data generating means, ... and said signals $D_K$ provided by the Kth data generating means, and data receiving means are coupled to said transmission line for receiving said signals, $D_1$, $D_2$ ..., and $D_K$ on the basis of said clock pulse signal units $m_1$, $m_2$,..., and $m_K$.

Features and advantages of the invention will be more apparent from the following description of an embodiment thereof when taken in conjunction with the accompanying drawings, in which:

Figure 1 is an outline of the remote control system of the preferred embodiment of the invention, which includes a portable video tape recorder, a video camera, a tuner and a wired remote controller;

Figure 2 shows a circuit diagram of the data transmission system when using the apparatus shown in Figure 1;

Figure 3 shows waveforms of the serial clock signals and the serial data signals according to the preferred embodiment of the invention;

Figure 4 shows similar waveforms to those shown in Figure 3, when using the apparatus shown in Figure 1;

Figure 5 is the coded form of the serial data signal on the basis of the serial clock signal units $m_5$ and $m_6$ shown in Figure 4; and

Figure 6 is a serial interface circuit diagram for serial data transmission in accordance with the preferred embodiment.

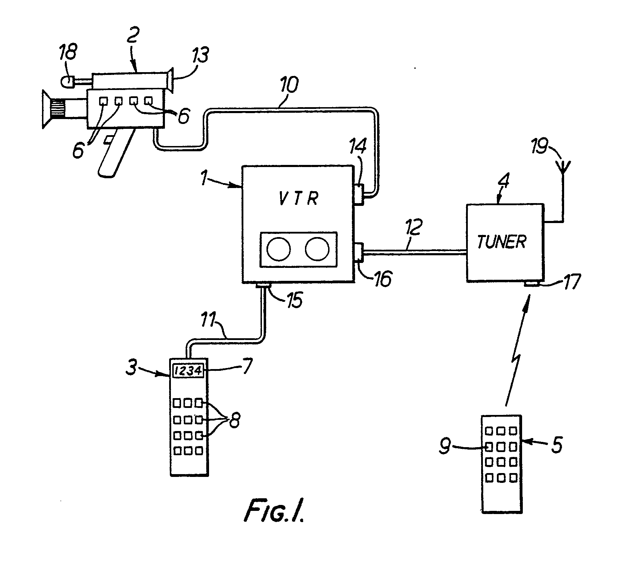

Fig. 1 is an outline of a portable VTR and exterior additional apparatuses connected to this VTR. Such apparatuses connected to a portable VTR 1 are a video camera 2, a wired remote controller 3, a tuner 4, and so on. Each of them is connected to the VTR 1 by cables 10, 11, and 12, and connectors 14, 15, and 16. The video camera 2 is an apparatus which transmits to VTR 1, a video signal converting the objective picture taken by the optical unit in video camera 2 into an electric signal.

When picture is taken with a video camera, it is convenient to be able to control VTR 1 by operations on the video camera's side, because, having a video camera in hand, the user directs the video camera to an objective scene. Accordingly, video cameras have conventionally tried to send out such control signals together with the aforesaid video signal to VTR 1 through a cable 10. Also, video camera 2 has customarily sent out an audio signal too from microphone 18 in video camera 2 in addition to the abovementioned signals.

As abovementioned, the transmitted signals from video camera 2 to VTR 1 are the control signals, a video signal and an audio signal, but there are the transmitted signals from VTR 1 to video camera 2 to be considered as well. If sending out, for example, the data signals such as a tape counter value and a battery remaining value from VTR 1 to a video camera, the video camera can indicate the values on its body, it is convenient for the user to be able to control all operations, since the user can know information about the VTR 1 on the video camera's indicator. Video camera indicators have used an electronic view finder consisting of extremely small cathode ray tubes, by which the user confirms the objective picture taken by the video camera.

Next, a wired remote controller will be described. This is an apparatus which can control VTR 1 from a place separated a fairly good distance from the VTR 1. There are not, in this case, a video signal and an audio signal sent out from a wired remote controller 3 to VTR 1, but only control signals. However, as it is convenient to indicate tape counter value expressed as a tape travel quantity, and so on as well on the video camera itself, in this case, it is desirable to use a liquid crystal display. Also, the operating switches 8 on the wired remote controller are to be the same as those on the VTR 1.

Next, another apparatus, the tuner 4 will be described. The tuner is an apparatus to obtain the broadcasted video and audio signals by demodulation of on-air-television signal received by antenna. These obtained signals are sent out to VTR 1 through a cable 12 and connector 16. Also, as most tuners have a timer, in this case, the control signals for time setting, recording start, and so on, are sent out from tuner 4 to VTR 1. Furthermore the tuner has a receiver 17 for receiving the infrared rays generated by the wireless remote controller 5, from which the channel selecting command signal, VTR operating command signal, and so on are sent out by pressing the operating buttons 9. However, VTR operating commands from the wireless remote controller, after the controller receives the infrared rays of this command signal by means of receiver 17, need to be converted into the control signal for VTR 1 and sent out to VTR 1.

This invention aims at provision of a system for transmitting efficiently the remote control signals and the data signals from each of the abovementioned apparatuses.

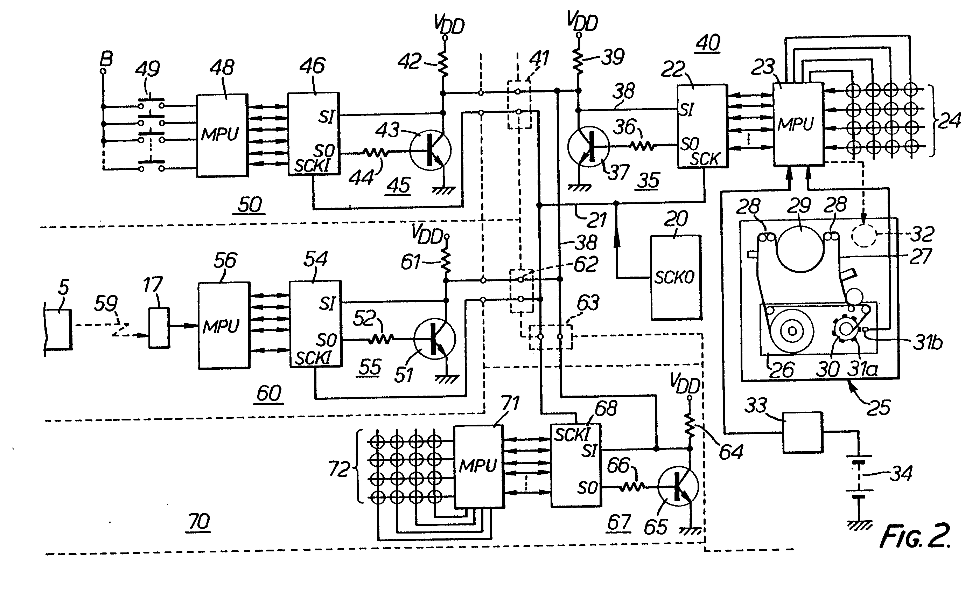

Fig. 2 shows circuit diagram of an effective example embodiment of the above mentioned remote control system of this invention. In Fig. 2, circuit 40 is a data transmitting and receiving circuit for remote control signals and data signals in VTR 1. VTR 1 needs, besides the aforesaid circuit, a mechanism 25, a battery remaining detecting circuit 33, a video and audio signal processing circuit (not shown in Fig. 2), motor drive and servo circuit (not shown in Fig. 2), and so on. Circuits 50, 60, and 70, are data transmitting and receiving circuits for remote control signals and data signals in video camera 2, wired remote controller, and tuner, respectively. Fig. 2 does not show the optical system and the video and audio processing circuit in the video camera 2, and a demodulator to obtain video and audio signals from on-air-television signal in the tuner 4.

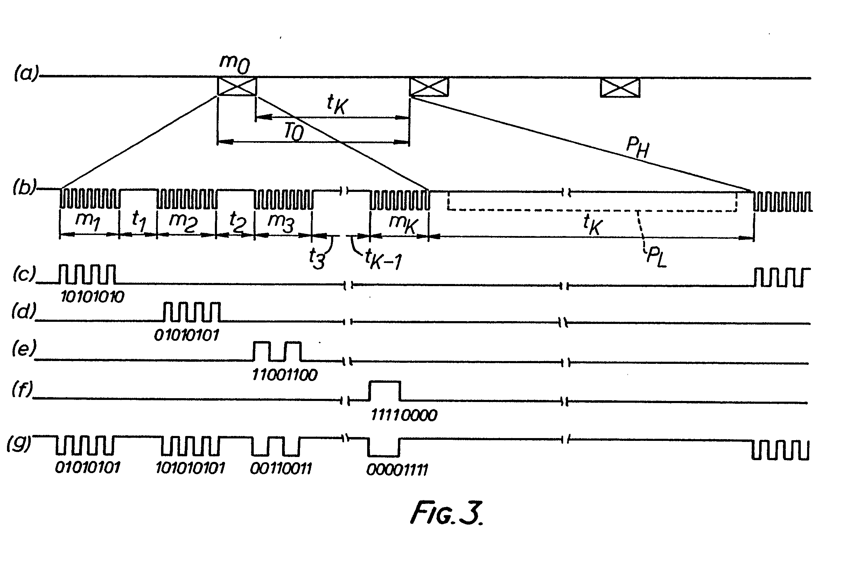

Next, each circuit block shown in Fig. 2 will be detailed. The circuit 40 has a serial clock signal generating means 20, a serial data generating and receiving means 22 (to be hereinafter called SDGR means), and an inverter circuit 35. The circuit 50 in the video camera, the circuit 60 in the tuner, the circuit 70 in the wired remote controller 3 have, respectively, SDGR means 46, 54, and 68, and inverter circuits 45, 55, and 65. A serial clock signal shown in Fig. 3-a and Fig. 3-b from the aforesaid serial clock generating means is supplied to a serial clock signal input terminal SCKI on each SDGR means, also serial data signal input terminals SI on SDGR means 22, 46, 54, and 68 are connected with each other by one line 38. A serial data signal output from a serial data signal output terminal of each of circuits 50, 60, 70 and 80, is output on a serial data line through inverter circuits 35, 45, 55 and 65.

The operation of these circuits will be detailed with reference to wave forms of their output signals. As abovementioned, the signals shown in Fig. 3-a and Fig. 3-b are output from a serial clock signal generating means 20. As shown in Fig. 3-a, the serial clock signal consists of a serial clock signal block $m_0$ and a no signal interval $t_K$, generated periodically at intervals of $t_0$, and also, a serial clock signal block $m_0$ consisting of n bit serial clock signal units $m_1$, $m_2$..., and $m_K$, and no signal intervals $t_1$, $t_2$,..., and $t_{K-1}$, as shown in Fig. 3-b. (Fig. 3-b shows enlargement of a serial clock block $m_0$.)

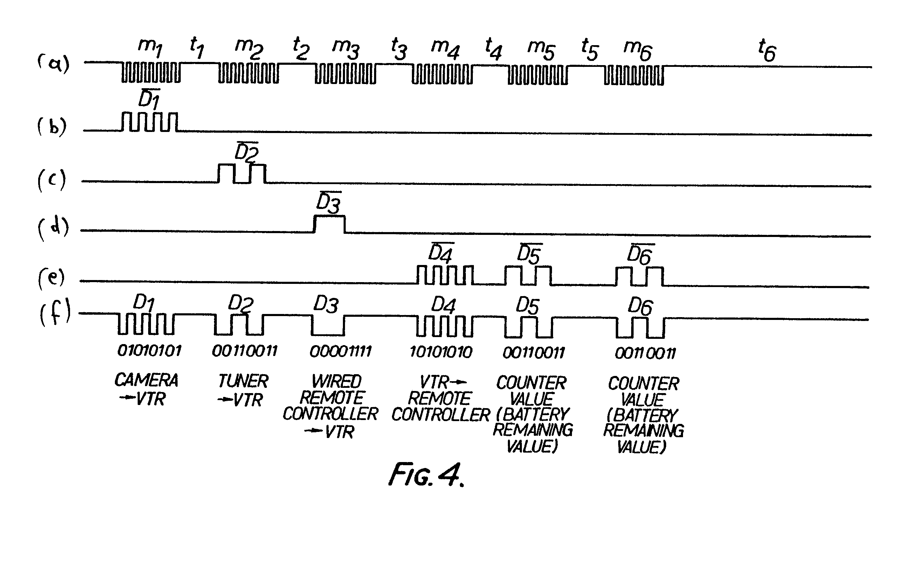

In order to speak generally, Fig. 3-b shows the case wherein the number of serial clock signal units (to be hereinafter, called SCSU) is K (integer), but the system shown in Fig. 1 deals with the relation among video camera, tuner, wired remote controller, and VTR. In this case, wave forms are shown in Fig. 4, and the serial clock signal shown in Fig. 3-b corresponds to the signal shown in Fig. 4-a. Namely, this serial clock signal consists of 8 bit SCSU units $m_1$, $m_2$..., and $m_6$. Each SCSU unit $m_1$, $m_2$, ..., or $m_6$ is assigned a position corresponding to each of these apparatuses.

When VTR 1 is controlled by the operation of video camera 2, a serial data signal $\overline{D}_1$ shown in Fig. 4-b is output from a terminal SO on SDGR means 46, on the basis of a serial clock signal $m_1$. As abovementioned, signal $\overline{D}_1$ is output into serial data line 38 after inverting to serial data signal $D_1$ by inverter 45. The serial data line 38 is pulled up by resistors 39, 42, 61 and 64 in each apparatus, therefore, the serial data signal on the serial data line 38 becomes "H" level at no signal position and "L" level at the position at which the data is "1", as shown in Fig. 4-f. Accordingly, if low level in a signal is "0" and high level in a signal is "1" the code "10101010" of a serial data signal output from a terminal SO on an SDGR means becomes the code "01010101" as a serial data signal on data line 38.

Next, for tuner 4, the serial data signal $\bar{D}_2$, which is output from terminal SO on SDGR means 60 on the basis of SCSU $m_2$, is output into data line 38 through an inverter 55, as shown in Fig. 4-c and Fig. 4-f and also, for a wired remote controller, the serial data signal $\bar{D}_3$ is output into data line 38 just as in the case of the tuner. (reference to Fig. 4-d and Fig. 4-f.) Serial data signals corresponding to the above mentioned SCSUs $m_1$, $m_2$, and $m_3$ are $D_1$ from a video camera, $D_2$ from a tuner, and $D_3$ from a wired remote controller, respectively. However, SCSUs $m_4$, $m_5$, and $m_6$ are assigned to the serial data signals $D_4$, $D_5$, and $D_6$ from the VTR 1 to each apparatus, as shown in Fig. 4, that is, the serial data signals $D_4$, $D_5$, and $D_6$ transmit the information of tape counter value indicating tape travel quantity or battery remaining value, from VTR 1 to each of the sub apparatuses.

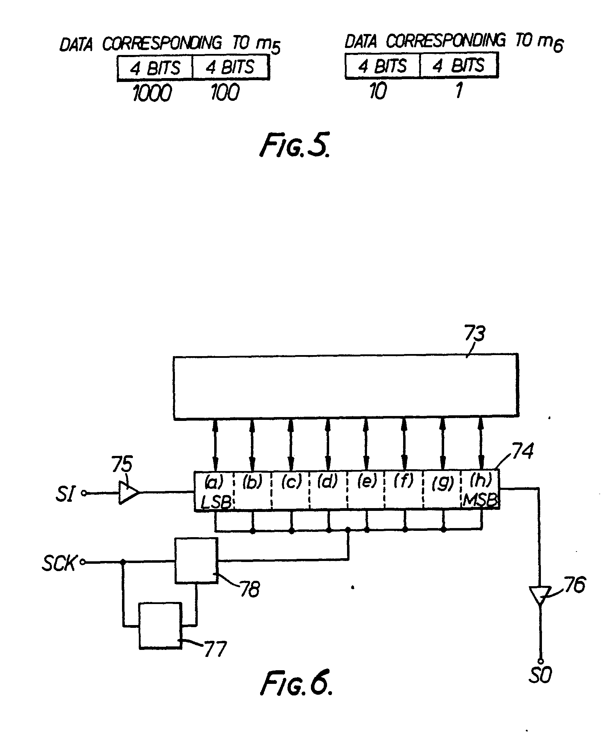

Since tape counter value is shown conventionally by a four figure decimal expression, each decimal number requires conversion from the number's binary value, so that 8 bit serial data signals $D_5$ and $D_6$ corresponding to SCSUs $m_5$, $m_6$ is divided into upper 4 bits and lower 4 bits, as shown in Fig. 5. The upper 4 bit binary code in serial data signal $D_5$ indicates the thousands digit of the tape counter, the lower 4 bit code in $D_5$ indicates the hundreds digit, the upper 4 bit code in $D_6$ indicates the tens digit, and the lower 4 bit code in $D_6$ indicates the units digit. However, as VTR 1 needs to out not only a serial data signal of tape counter value, but also a serial data signal of battery remaining value, prior to signals $D_5$ and $D_6$, the VTR sends out serial data signal $D_4$ corresponding to SCSU $m_4$, which indicates whether serial data signals $D_4$ and $D_5$ sent out tape counter value or battery remaining value. For example, as shown in Fig. 4, when the code of $D_4$ is "10101010", the next $D_5$ and $D_6$ is a tape counter value. And also, when the code of $D_4$ is "11110000", the next $D_5$ and $D_6$ is a battery remaining value. As the change of counter value during fast forward or fast rewind (of VTR operation) is very rapid and the change of a battery remaining value is very slow, it is efficient to transmit a serial data signal of tape counter value, and once per minute a serial data signal of battery remaining value.

Below, the serial data signal input and output of an SDGR means is detailed. An embodied example of an SDGR means is shown in Fig. 6. The SDGR means fundamentally consists of a shift register 74 and the input and output buffer circuits 75 and 76. Each memory circuit (a), (b), (c), (d), (e), (f), (g) and (h) of the shift register 74, which consists of FLIP-FLOP circuits, is coupled to a memory circuit 73 which can input and output data in parallel. Though this memory circuit 73 conventionally utilised its own exclusive IC, recently this circuit utilizes internal RAM (Random Access Memory) of a microcomputer (to be hereinafter called MPU).

When a serial data signal is output from the SDGR means, previously the data is latched in memory circuit 73, thereafter this data is sent out to the shift register 74. Data in the shift register 74 is output from terminal SO on the basis of a serial clock signal input to a terminal SCK shown in Fig. 6, and also data input to a terminal SI on the SDGR means is taken in the shift register 74 on the basis of this serial clock signal. Data is put in a shift register 74, in order, according to a serial clock signal, until the 8 bit shift register 74 is full, thereafter, data in the shift register 74 is transferred to the memory circuit 73 in parallel. As recent MPUs have all the aforesaid shift register built-in, the operation of the SDGR means can be accomplished by a program in ROM (Read Only Memory) in the MPU.

An SDGR means 22, 46, 54, and 68 shown in Fig. 2 consists of the shift register 74 and its buffer circuits 75, 76. The memory circuit 73 corresponds to MPU 23, MPU 48, MPU 56, and MPU 71 in Fig. 2. These MPUs are coupled to the operating buttons 24, 49, and 72, and so, generate the predetermined code by means of pressing the aforesaid operating buttons. This coded signal is sent to an SDGR means, and is converted into a serial data signal by means of an SDGR means, thereafter this serial data signal is output from a terminal SO of the SDGR circuit. A video camera 2, when one of its operating buttons 49 is pressed, transmits the predetermined code for the VTR operation on the basis of SCSU $m_1$, then on SDGR 22 of VTR 1 receives a serial data signal from the video camera on the basis of SCSU $m_1$ and sends this received signal to MPU 23, thereafter MPU 23 decodes this received signal and outputs a control signal to the mechanism 25, thereby VTR 1 is operated by video camera 2. Other apparatuses, the tuner and wired remote controller operate the VTR just as in the case of video camera 2.

Next, a wireless remote controller 5 which uses a infrared rays will be described. The data signal sent by infrared rays from a wireless remote controller 9 is taken in a receiver 17 and is amplified, thereafter this received data signal is decoded and converted into a serial data signal for VTR operation, and is transmitted to VTR 1. Below the method of detecting a tape counter value and a battery remaining value will be detailed. A rough plan view of the mechanism 25 in VTR 1 is shown in Fig. 2 in a recording or playing condition. A tape 27, which is pulled out from a tape cassette 26, is wound up by a take-up reel 30 through a guide pole 28 and a rotary head assembly 29. Then, the mechanism is so designed that a magnet 31a is arranged at some distance on the periphery of take-up reel 30 and produces a value for each revolution of the take-up reel 30 in a detector. Accordingly, if a stationary detector 31b (like a hole element) is placed near this magnet 31a, a pulse signal is obtained from detector 31b for each revolution of the reel 30.

Provided that this pulse signal is given to MPU 23, MPU 23 counts this pulse signal and sends out the count data to an SDGR means 22, thereafter the count data is converted into a serial data signal $D_4$, $D_5$, and $D_6$ and is output from VTR 1 to each apparatus except VTR 1 on the basis of an SCSU $m_4$, $m_5$ and $m_6$. SDGR means 46 and 68 on video camera 2 and wired remote controller 3 respectively, receive the serial data signal transmitted from VTR 1 on the basis of SCSUs $m_4$, $m_5$, and $m_6$, and the received data signal is decoded and sent to the indicator by MPU 48.

Accordingly, for video camera, this data is indicated on electronic view finder 13 (reference to Fig. 1) and in case of the wired remote controller, on liquid crystal display 7 (reference to Fig. 1) and so, when detecting a battery remaining value, output voltage of battery 34 is given to a battery remaining voltage detector 33, and converted to a digital data signal, thereafter, the data signal output from this detector 33 is taken by MPU 23. Though only a serial clock signal line 21 and a serial data signal line 38 are shown in the cable in Fig. 2, each connector and cable of the video camera has the video signal line and an audio signal line besides the above mentioned clock and data lines. As the video and audio signal lines do not relate to this invention, these lines are not shown in Fig. 2.

Next, this invention will be further detailed by reference to Fig. 3. Fig. 3 shows wave forms in a general system in which there are SCSU $m_1$, $m_2$, . . ., and $m_K$. The number of bits for the SCSU is decided by the number of function of the system, namely the operating mode, thereof. 8 bits is enough for the VTR system shown in Fig. 2 and Fig. 4. In the VTR system, for example, a tuner needs a lot of code for: remote control signal, data signal for selection of television channel, the setting of year, month, week, day and time, the control functions of the VTR, and so on.

Next, the method of searching a first SCSU $m_1$ for a video camera will be detailed. If the time to connect VTR 1 with connector 14 of video camera 2 is an interval $t_2$, video camera 2 cannot send out a serial data signal at that instant. Accordingly, a serial data signal for the VTR control generated from the video camera must be sent out to VTR 1 on the basis of a serial clock signal $m_1$. Therefore, the SDGR means on the video camera ignores SCSU $m_3$, $m_4$, $m_5$, and $m_6$ after interval $t_2$ for connecting VTR 1 with a connector 14 and must start sending out a serial data signal on the basis of SCSU $m_1$ coming after SCSU $m_3$, $m_4$, $m_5$, and $m_6$. Then, the detection of first SCSU $m_1$ after its connection will be explained. SCSU $m_1$ is periodically coming after a longest interval $t_6$, so that the SDGR means, provided that a timer 77 is prepared in it, can detect interval $t_6$ because there is no clock signal within a predetermined time set on its timer 77. Therefore, SCSU $m_1$ coming after

interval $t_6$ can be detected. That is, if the timer 77 in the SDGR means is set to a particular time that is a little longer than the longest interval $t_{nmax}$ of intervals $t_1$, $t_2$, $t_3$, $t_4$ and $t_5$, interval $t_6$ can be detected because interval $t_6$ is longer than the particular time set by the timer 77, and a gate 78 is opened. The abovementioned time relation is as follows:

$$t_{nmax} < t_6 = T_0 - (t_1 + t_2 + t_3 + t_4 + t_5 + 6 \times 8 \times t_0) \quad (1)$$

wherein $t_0$ is the period of a serial clock signal. Therefore, the SDGR means can find the first SCSU $m_1$ coming after the interval $t_6$.

Also, when connector 14 is removed from VTR 1 by accident in an operation and again coupled to VTR 1, it is necessary to do the same as the abovementioned searching for the first SCSU $m_1$.

The other remote control apparatuses except video camera 1, namely, the tuner and the wired remote controller can utilize the abovementioned method of searching for SCSU, but the tuner needs to find SCSU $m_2$ and the wired remote controller, SCSU $m_3$. Then, the formula (1) is shown in a general form as follows:

$$t_{nmax} < t_K = t_0 - (t_1 + t_2 + \ldots + t_{K-1} + K \ n \ t_0) \quad (2)$$

wherein $t_{nmax}$ is the longest one of $t_1$, $t_2$, . . ., and $t_{K-1}$.

Also, it is possible to mix the signal such as $P_H$ and $P_L$ shown in Fig. 3 at interval $t_K$, since interval $t_k$ is rather longer. For example, this signal can be used when VTR 1 should show the other apparatuses that a recording is OK. This information is different from the above mentioned tape counter value and battery remaining value, that is, VTR 1 must transmit a serial data signal of a changeable tape counter value and also, sometimes a battery remaining value in serial data positions $D_4$, $D_5$ and $D_6$, therefore the VTR can not transmit a signal of a constant state of the recording together with a signal of a tape counter value and so on in the same position.

Therefore, if the VTR transmits this signal to the other apparatuses at interval $t_K$ ($t_6$ in case of Fig. 6), an SDGR means in a remote control apparatus can detect the recording condition according to check levels at intervals of $t_K$, wherein, an interval $t_{PL}$ of a signal $P_L$, as shown in Fig. 3, is in the range from $t_{nmax}$ till ($T_K - t_0$) so that signal $P_L$ cannot have an influence on any SCSU, namely this time relation is as follows.

$$t_{nmax} < t_{PL} < t_K - t_0 \quad (3)$$

This invention uses the interval $t_K$ in order to find out the initial SCSU at the time of connecting required apparatus with VTR 1, and decided that interval $t_k$ was the longest one of $t_1$, $t_2$, . . . and $t_K$, because this choice simplifies the system.

While a serial data signal from a remote control apparatus is received and sent out to MPU 23 in parallel by an SDGR means, therefore MPU 23 decodes a sent data signal and sends a command signal for control of motor 32 and so on to mechanism 25 and for an electric circuit, so that the VTR is operated.

As seen from the above, this invention provides a data transmission system for sending and receiving efficiently a remote control signal and a data signal in systems using a portable VTR and its additional apparatus such as video camera, tuner, and wire remote controller and so on, and also this invention has a superior effect in being able to deal with a large scale remote control system through a simplified terminal circuit for receiving and sending a data signal.

### Claims

1. A data transmission system for sending and receiving data among a plurality of apparatuses on the basis of a serial clock signal, comprising: a serial clock signal generating means (20) for periodically generating clock signals ($m_1$—$m_k$); a clock signal line (21) for transmitting said clock signals; a data signal line (38) for transmitting said data; a plurality of data transmitting/receiving means (40, 50, 60, 70) coupled to said clock signal line (21) and said data signal line (38) and also to said plurality of apparatuses, respectively, for sending and receiving coded data signals among each other through said data signal line, characterised in that said clock signal generating means (20) periodically generates plural sets of serial clock signals in a manner such that each period comprises a plural set of clock signals, said plural set comprising a set of clock signals ($m_i$) followed by a clock-absent interval ($t_i$) for a predetermined number (k) of sets of clock signals under the condition that said period starts with an initial serial clock ($m_1$) and ends with a final clock-absent interval ($t_k$), wherein said final clock-absent interval ($t_k$) is longer than the longest one of the other clock-absent intervals ($t_1$—$t_k$—1) in said period each of said plurality of data transmitting/receiving means (40, 50, 60, 70) comprising a serial interface circuit (22, 46, 54, 68) for sending or receiving in each period a set of serial coded data signals to said data signal line in accordance with a corresponding received set of serial clock signals.

2. A data transmission system according to claim 1, wherein said serial clock signal generating means (20) further generates in each period a state recognition signal ($P_L$, $P_H$) for indicating an operating state of a predetermined one of said apparatuses, said state recognition signal ($P_L$, $P_H$) being present within and shorter than the time interval of said final clock-absent interval ($t_k$) and also being longer than said longest one of said other clock-absent intervals in said period.

### Patentansprüche

1. Ein Datenübertragungssystem zum Senden und Empfangen von Daten zwischen einer Mehrzahl von Geräten auf der Grundlage eines seriellen Taktsignals, mit folgenden Merkmalen: einer seriellen Taktsignalerzeugungseinrichtung (20) zum periodischen Erzeugen von Taktsignalen ($m_1$ bis $m_k$); einer Taktsignalleitung (21) zum Übertragen der Taktsignale; einer Datensignalleitung (38) zum Übertragen der Daten; einer Mehrzahl von Datensende-/Empfangs-Einrichtungen (40, 50, 60, 70), die an die Taktsignalleitung (21) und an die Datensignalleitung (38) und ebenfalls an die Mehrzahl der Geräte jeweils angeschlossen sind, um kodierte Datensignale zwischen diesen über die Datensignalleitung zu senden und zu empfangen, dadurch gekennzeichnet, daß die Taktsignalerzeugungseinrichtung (20) periodisch mehrere Sätze von seriellen Taktdaten in einer Weise erzeugt, daß jede Periode eine Mehrzahl von Sätzen von Taktsignalen enthält, wobei die mehreren Sätze einen Satz von Taktsignalen ($m_i$) enthalten, dem ein taktfreies Intervall ($t_i$) für eine vorbestimmte Anzahl (k) von Sätzen von Taktsignalen unter der Bedingung folgt, daß die Periode mit einem anfänglichen seriellen Takt ($m_1$) beginnt und mit einem abschließenden taktfreien Intervall ($t_k$) endet, wobei das abschließende taktfreie Intervall ($t_k$) länger ist als das längste der anderen taktfreien Intervalle ($t_1$—$t_k$—1) in der Periode, wobei jede der Mehrzahl der Datensende-/Empfangs-Einrichtungen (40, 50, 60, 70) eine serielle Schnittstellenschaltung (22, 46, 54, 68) beinhaltet, um in jeder Periode einen Satz von seriell kodierten Datensignalen zur Datensignalleitung gemäß einem entsprechenden empfangenen Satz von seriellen Taktsignalen zu senden oder zu empfangen.

2. Ein Datenübertragungssystem nach Anspruch 1, bei dem die serielle Takterzeugungseinrichtung (20) ferner in jeder Periode ein Zustanderkennungssignal ($P_L$, $P_H$) erzeugt, um einen Betriebszustand von einem bestimmten der Geräte anzuzeigen, wobei das Zustandserkennungssignal ($P_L$, $P_H$) innerhalb des Zeitintervalls vorliegt und kürzer als das Zeitintervall des abschließenden taktfreien Intervalles ($t_k$) und länger als das längste der anderen taktfreien Intervalle in der Periode ist.

### Revendications

1. Système de transmission de données pour envoyer et recevoir des données entre une pluralité d'appareils sur la base d'un signal d'horloge série, comprenant un moyen de génération de signal d'horloge série (20) pour produire périodiquement des signaux d'horloge ($m_1$—$m_K$); une ligne de signal d'horloge (21) pour transmettre les signaux d'horloge; une ligne de signal de données (38) pour transmettre ces données; une pluralité de moyens d'émission/réception de données (40, 50, 60, 70) couplés à la ligne de signal d'horloge (21) et à la ligne de signal de données (38) et également à la pluralité d'appareils, respectivement, pour envoyer et recevoir des signaux de données codées d'un appareil à l'autre par l'intermédiaire de la ligne ds signal de données, caractérisé en ce que le moyen de production de signal d'horloge (20) produit périodiquement plusieurs ensembles de signaux d'horloge série de telle sorte que chaque période comprend un ensemble multiple de signaux d'horloge, cet ensemble multiple comprenant un ensemble de signaux d'horloge ($m_i$) suivis d'un intervalle sans-horloge ($t_i$) pendant un nombre prédéterminé (K) d'ensemble de signaux d'horloge avec la condition que ladite période commence par le signal d'horloge série initial ($m_1$) et se termine par un intervalle sans-horloge final ($t_K$), dans lequel l'intervalle sans-horloge ($t_K$) est plus long que le plus long des autres intervalles sans-horloge ($t_1$—$t_{K-1}$) dans ladite période, chacun de la pluralité de moyens d'émission/réception de données (40, 50, 60, 70) comprenant un circuit d'interface série (22, 46, 54, 68) pour envoyer ou recevoir dans chaque période un ensemble de signaux de données codés série à la ligne de signal de données en accord avec un ensemble reçu correspondant de signaux d'horloge série.

2. Système de transmission de données selon la revendication 1, dans lequel le moyen de production de signaux d'horloge série (20) produit en outre lors de chaque période un signal de reconaissance d'état ($P_L$, $P_H$) pour indiquer un état de fonctionnement de l'un prédéterminé desdits appareils, ce signal de reconnaissance d'état ($P_L$, $P_H$) étant présent pendant et plus court que l'intervalle de temps dudit intervalle sans-horloge final ($t_K$) et étant également plus long que le plus des autres intervalles sans-horloge dans ladite période.

FIG.I.

FIG. 2.

0 069 561

Fig.3.

(a)  $m_1$  $t_1$  $m_2$  $t_2$  $m_3$  $t_3$  $m_4$  $t_4$  $m_5$  $t_5$  $m_6$  $t_6$

(b)  $\overline{D_1}$

(c)  $\overline{D_2}$

(d)  $\overline{D_3}$

(e)  $\overline{D_4}$  $\overline{D_5}$  $\overline{D_6}$

(f)  $D_1$  $D_2$  $D_3$  $D_4$  $D_5$  $D_6$

01010101   00110011   00001111   10101010   00110011   00110011

CAMERA →VTR | TUNER →VTR | WIRED REMOTE CONTROLLER →VTR | VTR→ REMOTE CONTROLLER | COUNTER VALUE (BATTERY REMAINING VALUE) | COUNTER VALUE (BATTERY REMAINING VALUE)

*FIG. 4.*

0 069 561

DATA CORRESPONDING TO $m_5$

| 4 BITS | 4 BITS |
|--------|--------|
| 1000 | 100 |

DATA CORRESPONDING TO $m_6$

| 4 BITS | 4 BITS |
|--------|--------|
| 10 | 1 |

**Fig.5.**

**Fig.6.**